# EUROPÄISCHE PATENTSCHRIFT

(11) **EP 2 371 644 B1**
(45) Veröffentlichungstag und Bekanntmachung des Hinweises auf die Patenterteilung: **30.03.2016**
(21) Anmeldenummer: 10194569.9
(22) Anmeldetag: 10.12.2010
(51) Int. Cl.: B60T 15/48, B60T 17/02

(54) **Druckluftanlage**
Pressurised air assembly
Installation à air comprimé

(30) Priorität: 22.12.2009 DE 102009055210
(43) Veröffentlichungstag der Anmeldung: 05.10.2011
(73) Patentinhaber: Haldex Brake Products GmbH, 69123 Heidelberg (DE)
(72) Erfinder: Aumüller, Ralf, 60437, Frankfurt (DE)
(74) Vertreter: REHBERG HÜPPE + PARTNER

(56) Entgegenhaltungen:
- EP-A1- 0 199 948
- EP-A1- 1 502 778
- EP-A1- 2 050 596
- DE-C1- 10 220 790

## Beschreibung

### TECHNISCHES GEBIET DER ERFINDUNG

Die Erfindung betrifft eine Druckluftanlage gemäß dem Oberbegriff des Patentanspruchs 1.

### STAND DER TECHNIK

Aus DE 102 20 790 C1 ist eine gattungsgemäße Druckluftanlage für ein Nutzfahrzeug bekannt, welcher Druckluft über einen Kompressor zugeführt wird. Die Druckluft gelangt über eine Trocknerkartusche zu einer Zentralleitung. Von der Zentralleitung kann die Druckluft unter Zwischenschaltung von Kreisschutzventilen, hier gesteuerten Überströmventilen, einerseits Behältern für Verbraucherkreise I und II, die als Betriebsbremskreise ausgebildet sind, und andererseits entsprechend Verbraucherkreisen III-V, die nicht zwingend mit Druckluftbehältern ausgestattet sein müssen, zugeführt werden. Die Druckluftanlage verfügt stromaufwärts der Zentralleitung über einen Druckregler, über welchen bei nicht in der Druckluftanlage benötigter Druckluft die vom Kompressor geförderte Druckluft in die Umgebung abgeleitet werden kann. Ein hierzu eingesetztes Druckregelventil wird über ein Magnetventil angesteuert. Ein weiteres Magnetventil ist multifunktional ausgebildet: In seiner ersten Funktion ist über das Magnetventil in einer Belüftungsstellung eine Druckluftverbindung zwischen der Zentralleitung und zwei Steuereingängen der gesteuerten Überströmventile der Verbraucherkreise I, II geschaffen. Mit entsprechender Druckbeaufschlagung dieser Steuereingänge kann der Öffnungsdruck der Überströmventile verringert werden. In der Belüftungsstellung des Magnetventils kann somit erwirkt werden, dass die Verbraucherkreise I, II vorrangig vor den Verbraucherkreisen III-V gefüllt werden. Darüber hinaus stellt das Magnetventil in seiner zweiten Funktion eine Druckluftverbindung zwischen der Zentralleitung und einer zu der Trocknerkartusche führenden Regenerationsleitung her, die ein eingangsseitig der Zentralleitung angeordnetes Rückschlagventil überbrückt und über welche eine Regenerationsluftmenge in umgekehrter Strömungsrichtung die Trocknerkartusche zwecks Regeneration derselben durchströmen kann. Für den Befüllungsvorgang der Verbraucherkreise I, II ist infolge der Überführung des Magnetventils in die Belüftungsstellung die Herstellung der Druckluftverbindung zu der Regenerationsleitung ohne Wirkung, da sich infolge des Förderbetriebs des Kompressors und des hohen in der Trocknerkartusche vorhandenen Drucks tatsächlich kein Regenerationsluftstrom ausbildet. Demgemäß kann trotz geschaffener Leitungsverbindung zu der Regenerationsleitung eine Befüllung der Zentralleitung und der Verbraucherkreise I, II erfolgen. Ist hingegen tatsächlich eine Regeneration der Trocknerkartusche gewünscht, wird in der Trocknerkartusche durch geeignete Beaufschlagung des Druckreglers das Druckniveau derart abgesenkt, dass für Magnetventil in der Belüftungsstellung eine Regenerationsluftmenge in umgekehrter Strömungsrichtung die Trocknerkartusche durchströmen kann. Hierbei ist es auch von Vorteil, dass über die entsprechende Stellung des Magnetventils der Steueranschluss der gesteuerten Überströmventile druckbeaufschlagt ist, da eine geöffnete Stellung des Kreisschutzventils für den Regenerationsbetrieb gewünscht ist, für welchen dann für die Regeneration Druckluft aus den Druckluftbehältern der Verbraucherkreise I, II verwendet werden kann. In der Druckschrift kommt für die Ansteuerung der Kreisschutzventile der Verbraucherkreise III, IV jeweils ein weiteres Magnetventil zum Einsatz.

DE 10 2007 013 672 A1 beschreibt eine Druckluftanlage mit zwei von einer Zentralleitung über pneumatisch ansteuerbare Überströmventile versorgten Betriebsbremskreisen, welche parallel stromabwärts der Überströmventile jeweils über ein Rückschlagventil mit weiteren Verbraucherkreisen gekoppelt sind. Darüber hinaus ist von der Zentralleitung über ein nicht pneumatisch angesteuertes Überströmventil ein Luftfederkreis gespeist. Die den Betriebsbremskreisen zugeordneten Überströmventile werden über ein Magnetventil angesteuert, welches je nach Schaltstellung den Steueranschluss der Überströmventile entlüftet oder verbindet mit dem weiteren Verbraucherkreis, welcher den beiden Betriebsbremskreisen parallel geschaltet ist. Das Magnetventil ist auch Bestandteil eines Regenerationsluftpfades.

### AUFGABE DER ERFINDUNG

Der vorliegenden Erfindung liegt die Aufgabe zugrunde, eine Druckluftanlage vorzuschlagen, welche hinsichtlich des baulichen Aufwands, insbesondere der Anzahl der Magnetventile, die für die Ansteuerung der Verbraucherkreise, der Kreisschutzventile und/oder eines Regenerationsventils erforderlich sind, zu reduzieren.

### LÖSUNG

Die Aufgabe der Erfindung wird gelöst mittels einer Druckluftanlage mit den Merkmalen des Patentanspruchs 1. Weitere Ausgestaltungen der erfindungsgemäßen Lösung ergeben sich entsprechend den abhängigen Patentansprüchen 2-7.

### BESCHREIBUNG DER ERFINDUNG

Erfindungsgemäß ist abweichend zum Stand der Technik ein Magnetventil nicht lediglich für die Steuerung der Regeneration und die Ansteuerung eines Steueranschlusses eines Kreisschutzventils, welches in einer Zuführleitung zu einem einer Betriebsbremse zugeordneten Verbraucherkreis (oder beiden den Betriebsbremsen zugeordneten Verbraucherkreisen) zuständig. Vielmehr ist erfindungsgemäß dieses Magnetventil (im Folgenden auch "multifunktionales Magnetventil") auch für die Druckbeaufschlagung eines Steueranschlusses eines Kreisschutzventils verantwortlich, welches in einer Zuführleitung zu einem weiteren Verbraucherkreis (insbesondere Verbraucherkreis III für die Anhängerbremse) zuständig.

Weiterhin beruht die Erfindung auf der Erkenntnis, dass es vorteilhaft ist, wenn der Steuerdruck, der an dem Steueranschluss des Kreisschutzventils in dem weiteren Verbraucherkreis anliegt, sowohl von der Stellung des multifunktionalen Magnetventils als auch von dem Druck in dem weiteren Verbraucherkreis abhängig ist. Durch die Druckabhängigkeit von dem Druck in dem weiteren Verbraucherkreis kann trotz der Ansteuerung von drei Verbraucherkreisen über ein einziges multifunktionales Magnetventil dafür Sorge getragen werden, dass die den Betriebsbremskreisen zugeordneten Verbraucherkreise I, II unter Umständen bei einer Erst- oder Wiederbefüllung, bspw. für eine Inbetriebnahme des Fahrzeugs nach einem Stillstand oder dem Parken, vorrangig befüllt werden vor einer Befüllung des nachgeordneten Verbraucherkreises III. Liegt hingegen in dem weiteren Verbraucherkreis ein hinreichender Druck vor, kann daran anschließend, unter Umständen gleichrangig mit den Verbraucherkreisen I, II, eine Ansteuerung des Verbraucherkreises III ausschließlich durch das multifunktionale Magnetventil erfolgen, da hinreichender Druck in dem weiteren Verbraucherkreis vorhanden ist.

In weiterer Ausgestaltung ist erfindungsgemäß ein pneumatisches Schaltventil vorgesehen. Das pneumatische Schaltventil steuert den Druck an dem Steueranschluss des Kreisschutzventils, welches in der Zuführleitung zu dem weiteren Verbraucherkreis III angeordnet ist. Dem pneumatischen Schaltventil wird ein (Ausgangs-)Druck des multifunktionalen Magnetventils zugeführt. Darüber hinaus wird dem pneumatischen Schaltventil der Druck in dem weiteren Verbraucherkreis bzw. dessen Zuführleitung zugeführt. Mittels des pneumatischen Schaltventils wird dann ein (Ausgangs-)Druck erzeugt, der dem Steueranschluss des Kreisschutzventils zugeführt wird. Dieser Druck ist dann sowohl von der Stellung des Magnetventils als auch von dem Druck in dem weiteren Verbraucherkreis abhängig. Der Einsatz eines derartigen pneumatischen Schaltventils stellt eine sehr einfache, aber zuverlässige Lösung dar, die dennoch gewährleistet, dass während der Befüllung der Anlage eine vorrangige Befüllung der Verbraucherkreise I, II erfolgen kann.

In weiterer Ausgestaltung der Erfindung ist das multifunktionale Magnetventil über das pneumatische Schaltventil mit dem Steueranschluss des Kreisschutzventils des weiteren Verbraucherkreises III verbunden. Ein Steueranschluss des pneumatischen Schaltventils ist mit dem weiteren Verbraucherkreis (bzw. einer Zuführleitung zu diesem) verbunden. Steigt somit der Druck in dem weiteren Verbraucherkreis, führt dieses zu einem Druckanstieg an dem Steueranschluss des pneumatischen Schaltventils. Wird ein Schwellwert des Drucks an dem Steueranschluss des pneumatischen Schaltventils infolge des Druckanstiegs in dem weiteren Verbraucherkreis überschritten, führt dies dazu, dass das pneumatische Schaltventil automatisch umschaltet.

In weiterer Ausgestaltung der Erfindung ist das pneumatische Schaltventil als ein 3/2-Wegeventil ausgebildet. Bei drucklosem Steueranschluss nimmt das pneumatische Schaltventil eine Entlüftungsstellung ein. In dieser Entlüftungsstellung ist der Steueranschluss des Kreisschutzventils entlüftet. In dieser Schaltstellung erfolgt die vorrangige Belüftung der Verbraucherkreise I, II, während das Kreisschutzventil des Verbraucherkreises III eine Sperrstellung einnimmt. Erfindungsgemäß nimmt das 3/2-Wegeventil eine Belüftungsstellung ein, wenn eine hinreichende Druckbeaufschlagung des Steueranschlusses des 3/2-Wegeventils erfolgt. In dieser Belüftungsstellung ist der Anschluss des Magnetventils über das 3/2-Wegeventil mit dem Steueranschluss des Kreisschutzventils verbunden. Diese Belüftungsstellung hat somit zur Folge, dass der Öffnungsdruck des Kreisschutzventils reduziert wird oder das Kreisschutzventil geöffnet wird, womit dann eine Befüllung des Verbraucherkreises III auch für einen kleineren Druck in der Zentralleitung erfolgen kann.

In alternativer Ausgestaltung ist das pneumatische Schaltventil als 2/2-Wegeventil ausgebildet. Das 2/2-Wegeventil nimmt bei drucklosem Steueranschluss, also drucklosem Verbraucherkreis III, eine Sperrstellung ein. Steigt hingegen der Druck in dem Verbraucherkreis III hinreichend an, nimmt das 2/2-Wegeventil eine Belüftungsstellung ein. In dieser Belüftungsstellung ist der Anschluss des multifunktionalen Magnetventils über das 2/2-Wegeventil mit dem Steueranschluss des Kreisschutzventils verbunden. Dies führt ebenfalls zu einer Umschaltung des Kreisschutzventils, womit die Befüllung des Verbraucherkreises III ermöglicht wird.

In einer weiteren Ausgestaltung dieses Lösungsgedankens ist parallel zu dem 2/2-Wegeventil ein Rückschlagventil angeordnet. Das Rückschlagventil ermöglicht eine Strömung von Druckluft von dem Steueranschluss des Kreisschutzventils zu dem multifunktionalen Magnetventil, während das Rückschlagventil eine Strömung von Druckluft von dem Magnetventil zu dem Kreisschutzventil sperrt. Über die Verwendung dieses Rückschlagventils kann auf eine sehr einfache Weise folgende Fehlfunktion vermieden werden: Bei einer Belüftungsstellung des multifunktionalen Magnetventils und dem pneumatischen Schaltventil in Durchlassstellung liegt zunächst ein Druck an dem Steueranschluss des Kreisschutzventils an. Fällt dann in dem weiteren Verbraucherkreis III der Druck ab, kann dies zu einem Umschalten des pneumatischen Schaltventils von der Durchlassstellung in die Sperrstellung führen. Die Sperrstellung hat dann aber zur Folge, dass der an dem Steueranschluss des Kreisschutzventils anliegende Druck "eingesperrt" wird. Kommt es dann zu einer Wiederbefüllung der Anlage, befindet sich das dem weiteren Verbraucherkreis zugeordnete Kreisschutzventil infolge des eingesperrten Drucks in seiner Durchlassstellung, womit die Anforderung, dass eine vorrangige Befüllung der Verbraucherkreise I, II erfolgen soll, nicht mehr erfüllt werden kann.

Für einen alternativen Lösungsgedanken ist das multifunktionale Magnetventil mit dem Steueranschluss des pneumatischen Schaltventils verbunden. In diesem Fall verbindet das pneumatische Schaltventil in einer Schaltstellung eine Zuführleitung des weiteren Verbraucherkreises mit dem Steueranschluss des Kreisschutzventils. Durch die Betätigung des multifunktionalen Magnetventils kann somit das pneumatische Schaltventil von einer Stellung in eine andere Stellung umgeschaltet werden. Während in einer Stellung der Steueranschluss des Kreisschutzventils entlüftet ist, wird in der anderen Stellung der Steueranschluss des Kreisschutzventils mit dem Druck in dem weiteren Verbraucherkreis III beaufschlagt. Mit hinreichendem Druckanstieg im Verbraucherkreis III kann somit (bei ergänzender korrespondierender Stellung des Magnetventils) eine Umschaltung des Kreisschutzventils bewirkt werden. Vorteilhafte Weiterbildungen der Erfindung ergeben sich aus den Patentansprüchen, der Beschreibung und den Zeichnungen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Druckluftanlage gemäß dem Stand der Technik, bei welcher die Verbraucherkreise I, II und III jeweils über Magnetventile vorgesteuert sind.
- **Fig. 2**: zeigt eine erste erfindungsgemäße Druckluftanlage in schematischer Darstellung.
- **Fig. 3**: zeigt eine zweite erfindungsgemäße Druckluftanlage in schematischer Darstellung.
- **Fig. 4**: zeigt eine dritte erfindungsgemäße Druckluftanlage in schematischer Darstellung.
- **Fig. 5**: zeigt eine vierte erfindungsgemäße Druckluftanlage in schematischer Darstellung.

### FIGURENBESCHREIBUNG

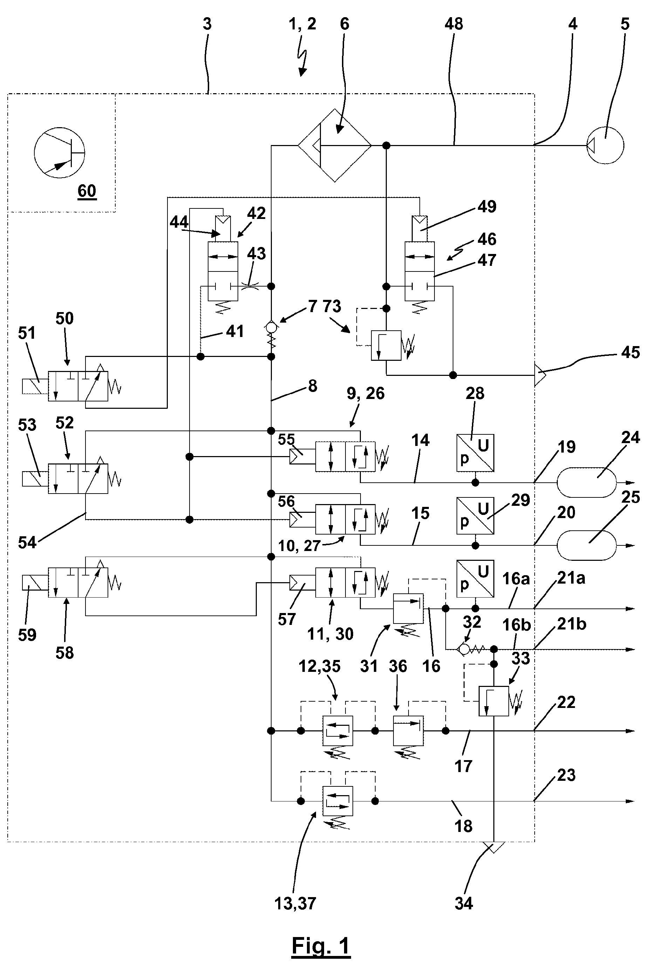

**Fig. 1** zeigt eine Druckluftanlage 1 für ein Nutzfahrzeug. Für die hier dargestellten Ausführungsformen der Druckluftanlage ist diese mit einer Baueinheit 2 gebildet, bei welcher die im Folgenden genannten Bauelemente in dem in den Figuren strichpunktiert dargestellten Gehäuse 3 angeordnet sind. Ohne dass hierdurch der Rahmen der Erfindung verlassen wird, können die Bauelemente in einer beliebigen Zahl von Teil-Baueinheiten mit separaten Gehäusen angeordnet sein, die insbesondere über elektrische und/oder pneumatische Leitungen miteinander verbunden sind. Ebenfalls möglich ist, dass Teil-Baueinheiten modular ausgebildet sind und unmittelbar aneinander angesetzt werden können.

Das Gehäuse 3 besitzt einen Anschluss 4, der aus einer Druckluftquelle, hier einem Kompressor 5, mit Druckluft versorgt wird. Der Anschluss 4 ist in dem Gehäuse 3 über eine Eingangsleitung 48, einen Lufttrockner 6 und ein Rückschlagventil 7 mit einer Zentralleitung 8 verbunden, wobei das Rückschlagventil 7 in Richtung einer Befüllung der Zentralleitung 8 öffnet. Die Zentralleitung 8 ist unter Zwischenschaltung von Kreisschutzventilen 9, 10, 11, 12, 13 mit Zuführleitungen 14-18 verbunden, die zu Anschlüssen 19-23 des Gehäuses 3 führen. Die Anschlüsse 19-23 sind in der genannten Reihenfolge mit Verbraucherkreisen I-V verbunden. Bei den Verbraucherkreisen I, II handelt es sich um Betriebsbremskreise, in welchen Vorratsbehälter 24, 25 angeordnet sein können.

Zwischen die Zentralleitung 8 und die Zuführleitungen 14, 15 zu den Verbraucherkreisen I, II ist jeweils ein pneumatisch angesteuertes Überströmventil 26, 27 zwischengeordnet, die die Kreisschutzventile 9, 10 bilden. Weiterhin befindet sich in den Zuführleitungen 14, 15 jeweils ein Drucksensor 28, 29, deren Ausgangssignale über nicht dargestellte elektrische Leitungen einer Steuereinheit 60 der Druckluftanlage 1 zugeführt werden.

Im Verbraucherkreis III ist das Kreisschutzventil 11 mit einem pneumatisch angesteuerten Überströmventil 30 gebildet, welchem ein Druckbegrenzungsventil 31 nachgeordnet ist. Stromabwärts des Druckbegrenzungsventils 31 verzweigt die Zuführleitung 16 in Zuführleitungen 16a, 16b. Die Zuführleitung 16a ist unmittelbar mit einem Anschluss 21a verbunden, an welchen eine Anhängerbremse angeschlossen ist. Hingegen ist die Zuführleitung 16b mit einem Anschluss 21 b verbunden, an welchen eine Federspeicherbremse des Zugfahrzeugs angeschlossen ist. In der Zuführleitung 16b ist ein Rückschlagventil 32 angeordnet, welches für eine Druckluftströmung in Richtung der Federspeicherbremse öffnet. Stromabwärts des Rückschlagventils 32 verzweigt die Zuführleitung 16b über ein Sicherheitsventil 33 zu einer Entlüftung 34, so dass der Druck an dem Anschluss 21 b unterhalb eines durch das Sicherheitsventil 33 vorgegebenen Drucks gehalten werden kann.

Zwischen die Zuführleitung 17 und die Zentralleitung 8 ist als Kreisschutzventil 12 die Kombination eines nicht pneumatisch ansteuerbaren Überströmventils 35 und eines Druckbegrenzungsventils 36 zwischengeschaltet. An den mit der Zuführleitung 17 verbundenen Anschluss 22 sind Nebenverbraucher angeschlossen.

In die Zuführleitung 18 zu dem Anschluss 23, welcher mit einer Luftfederungsanlage gekoppelt ist, ist ein nicht pneumatisch ansteuerbares Überströmventil 37 integriert, welches das Kreisschutzventil 13 bildet.

Die pneumatisch schaltbaren Überströmventile 26, 27, 30 besitzen jeweils einen Steueranschluss 55, 56, 57. Für nicht druckbeaufschlagten Steueranschluss 55, 56, 57 oder Druckbeaufschlagung mit einem Steuerdruck unterhalb eines Umschaltdrucks arbeiten die Überströmventile 26, 27, 30 in einer ersten Betriebsstellung als Überströmventile mit Rückströmung. Für hinreichende Druckbeaufschlagung der Steueranschlüsse 55, 56, 57 nehmen die schaltbaren Überströmventile 26, 27, 30 ihre zweite Betriebsstellung ein, in welcher die Überströmventile 26, 27, 30 eine Durchlassstellung einnehmen oder einen verringerten Öffnungsdruck besitzen, vgl. die in DE 102 20 790 C1 eingesetzten Überströmventile mit pneumatischer Ansteuerung. In der ersten Betriebsstellung sind die Öffnungsdrücke der Überströmventile 26, 27 kleiner als die Öffnungsdrücke des Überströmventils 30 in der ersten Betriebsstellung sowie die Öffnungsdrücke der Überströmventile 35, 37, so dass für die Inbetriebnahme der Druckluftanlage 1 eine vorrangige Befüllung der Vorratsbehälter 24, 25 der Betriebsbremskreise I, II erfolgt.

In einer das Rückschlagventil 7 umgehenden Bypassleitung 41 ist ein pneumatisch schaltbares 2/2-Wegeventil in Ausbildung als Sperrventil 42 mit vor- oder nachgeordneter Drossel 43 angeordnet. Liegt an dem Steueranschluss 44 des Sperrventils 42 hinreichender Steuerdruck an, schaltet das Sperrventil 42 in seine Durchlassstellung, so dass Druckluft aus der Zentralleitung 8, die auch bei hinreichendem Druckniveau zur Überwindung der Überströmventile mit Rückströmung aus den Verbraucherkreisen entstammen kann, über die Bypassleitung 41 an dem Rückschlagventil 7 vorbeiströmen kann und in der zur Befüllung umgekehrten Strömungsrichtung den Lufttrockner 6 zur Regeneration eines Trocknungsmittels durchströmen kann, um über einen Druckregler 46, der pneumatisch in seine Durchlassstellung geschaltet ist, und eine Entlüftung 45 in die Umgebung abgeleitet zu werden.

In Befüllungsrichtung ist dem Lufttrockner 6 der Druckregler 46 vorgeordnet, in welchem über ein 2/2-Wegeventil in Ausbildung als Sperrventil 47 die den Anschluss 4 mit dem Lufttrockner 6 verbindende Eingangsleitung 48 mit der Entlüftung 45 verbindbar ist. Das Sperrventil 47 besitzt einen Steueranschluss 49 und befindet sich ohne Druckbeaufschlagung des Steueranschlusses 49 in seiner Sperrstellung. Der Steueranschluss 49 ist über ein Magnetventil 50 in Ausbildung als 3/2-Wegeventil mit der Zentralleitung 8 verbunden. Für nicht bestromten Steueranschluss 51 des Magnetventils 50 befindet sich das Magnetventil 50 in seiner Entlüftungsstellung, in welcher der Steueranschluss 49 des Sperrventils 47 über das Magnetventil 50 entlüftet wird. Ist hingegen der Steueranschluss 51 bestromt, nimmt das Magnetventil 50 seine Belüftungsstellung ein, in welcher Druckluft aus der Zentralleitung 8 über das Magnetventil 50 dem Steueranschluss 49 zugeführt wird, womit eine Umschaltung des Sperrventils 47 in seine Durchlassstellung je nach Beaufschlagung des elektrischen Steueranschlusses 51 ermöglicht ist. In einem zu dem Druckregler 46 parallelen Leitungszweig ist ein Sicherheitsventil 73 angeordnet, welches gewährleistet, dass der Druck in der Eingangsleitung ein Druckmaximum nicht überschreitet.

Ein Magnetventil 52 ist ebenfalls als 3/2-Wegeventil mit Be- und Entlüftungsstellung ausgebildet mit einem elektrischen Steueranschluss 53. Das Magnetventil 52 ist zwischen die Zentralleitung 8 und eine zentrale Steuerleitung 54 zwischengeschaltet. In der nicht bestromten Entlüftungsstellung des Magnetventils 52 entlüftet dieses die zentrale Steuerleitung 54, während in der bestromten Belüftungsstellung die Zentralleitung 8 mit der zentralen Steuerleitung 54 verbunden ist. Die zentrale Steuerleitung 54 ist multifunktional eingesetzt:
- Die zentrale Steuerleitung 54 ist verbunden mit Steueranschlüssen 55, 56 der Überströmventile 26, 27.
- Darüber hinaus ist die zentrale Steuerleitung 54 verbunden mit dem Steueranschluss 44 des Sperrventils 42.

In der bestromten Belüftungsstellung des Magnetventils 52 sind die Überströmventile 26, 27 somit überbrückt oder deren Öffnungsdrücke sind verringert. Weiterhin befindet sich das Sperrventil 42 in seiner Durchlassstellung, so dass für eine Regeneration des Trocknungsmittels in dem Lufttrockner 6 das Rückschlagventil 7 über die Bypassleitung 41 überbrückt werden kann. Ist hingegen das Magnetventil 52 nicht bestromt, befinden sich die Überströmventile 26, 27 in der ersten Betriebsstellung, in welcher die Überströmventile ohne Reduzierung des Öffnungsdrucks wirksam sind. Weiterhin befindet sich in der unbestromten Entlüftungsstellung des Magnetventils 52 das Sperrventil 42 in seiner Sperrstellung.

Für die aus dem Stand der Technik bekannte Ausführungsform erfolgt - abweichend zu den erfindungsgemäßen Lösungen - die Ansteuerung des pneumatischen Steueranschlusses 57 des Überströmventils 30 über ein weiteres Magnetventil 58 in Ausbildung als 3/2-Wegeventil. In der nicht bestromten Entlüftungsstellung wird über das Magnetventil 58 der Steueranschluss 57 des Überströmventils 30 entlüftet, so dass die erste Betriebsstellung des Überströmventils 30 eingenommen ist. Wird hingegen das Magnetventil 58 bestromt, nimmt dieses seine Belüftungsstellung ein, in welcher das Magnetventil 58 die Zentralleitung 8 mit dem Steueranschluss 57 des Überströmventils 30 verbindet zwecks Umschaltung desselben in die zweite Betriebsstellung, in welcher der Öffnungsdruck des Überströmventils 30 zumindest verringert ist.

Eine Ansteuerung der Steueranschlüsse 51, 53 und 59 der Magnetventile 50, 52 und 58 erfolgt über die Steuereinheit 60.

Die im Folgenden erläuterten erfindungsgemäßen Ausführungsformen stimmen im Wesentlichen mit der Ausführungsform gemäß Fig. 1 überein. Allerdings ist infolge der erfindungsgemäßen Ausgestaltung das Magnetventil 58 entfallen und die Integration des Kreisschutzventils 11 bzw. des Überströmventils 30 in die Druckluftanlage und/oder dessen Ansteuerung ist verändert ausgebildet.

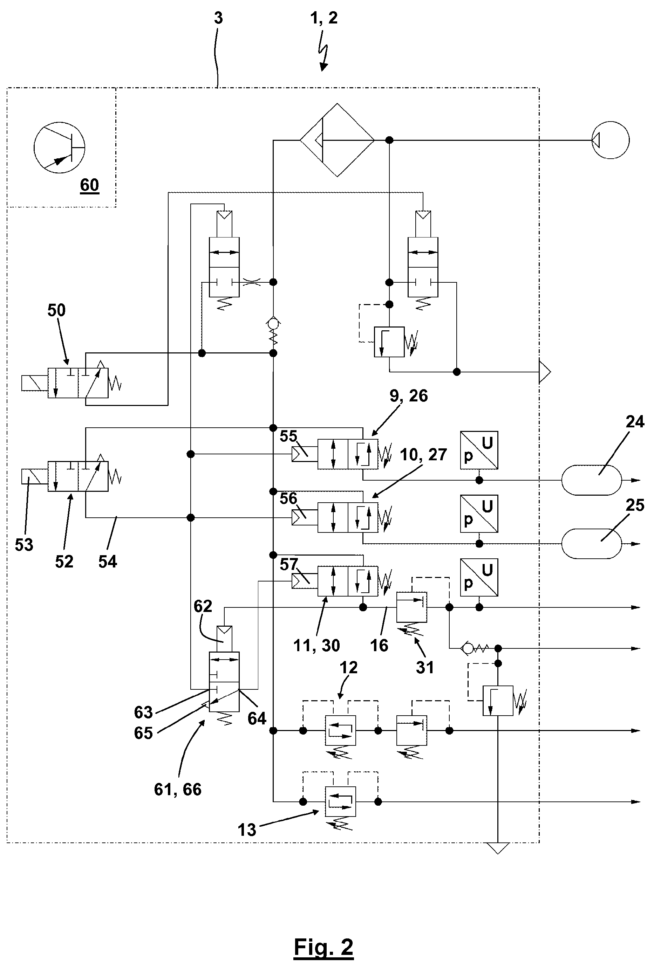

Für das in **Fig. 2** dargestellte Ausführungsbeispiel wird in der Druckluftanlage 1 ein pneumatisches Schaltventil 61 eingesetzt, welches gemäß Fig. 2 als 3/2-Wegeventil ausgebildet ist und einen pneumatischen Steueranschluss 62 besitzt. Das Schaltventil 61 besitzt einen Anschluss 63 sowie einen Anschluss 64 und einen Entlüftungsanschluss 65. Der Steueranschluss 62 des pneumatischen Schaltventils 61 ist mit der Zuführleitung 16 für den Verbraucherkreis III verbunden. Der Anschluss 64 ist mit dem Steueranschluss 57 des Kreisschutzventils 11 bzw. des Überströmventils 30 verbunden, während der Anschluss 63 mit der zentralen Steuerleitung 54 verbunden ist. Für nicht druckbeaufschlagten Steueranschluss 62 oder nicht ausreichenden Druck an diesem befindet sich das Schaltventil 61 wie in Fig. 2 dargestellt in seiner Entlüftungsstellung, so dass der Steueranschluss 57 des Kreisschutzventils 11 entlüftet ist und das Kreisschutzventil 11 ohne Reduktion des Öffnungsdrucks als Überströmventil wirkt. Steigt hingegen der Druck in der Zuführleitung 16 hinreichend an mit entsprechendem Druckanstieg an dem Steueranschluss 62, wird pneumatisch das Schaltventil 61 in seine Belüftungsstellung umgeschaltet, so dass der Druck in der zentralen Steuerleitung 54 an dem Steueranschluss 57 des Kreisschutzventils 11 anliegt. In dieser Schaltstellung des Schaltventils 61 kann somit über die elektrische Ansteuerung des Magnetventils 52 der Druck an dem Steueranschluss 57 des Kreisschutzventils 11 verändert werden, so dass letztendlich die Steuereinheit 60 den Öffnungsdruck des Kreisschutzventils 11 reduzieren kann oder dieses in eine Durchlassstellung überführen kann. In Fig. 2 ist das pneumatische Schaltventil 61 als 3/2-Wegeventil 66 ausgebildet.

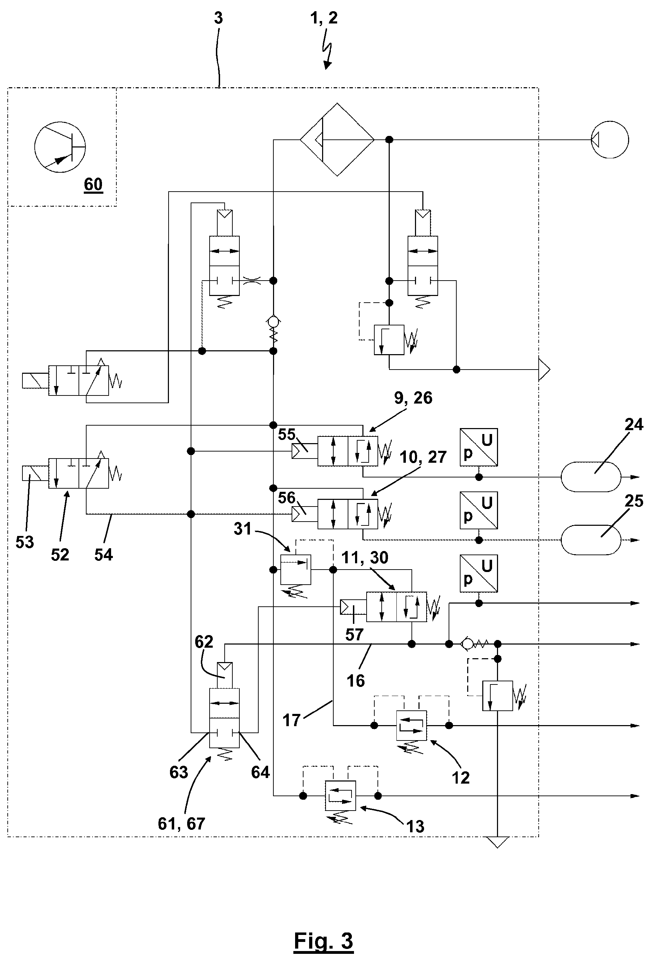

Für die abgewandelte Ausführungsform gemäß Fig. 3 ist das pneumatische Schaltventil 61 hingegen als 2/2-Wegeventil 67 mit einer Sperrstellung und einer Durchlassstellung ausgebildet, wobei das 2/2-Wegeventil 67 lediglich die Anschlüsse 63, 64 sowie den Steueranschluss 62 besitzt, welche entsprechend den Ausführungen zu Fig. 2 mit weiteren Bestandteilen der Druckluftanlage 1 verbunden sind. Für einen Druck in der Zuführleitung 16 unterhalb eines Umschaltdrucks befindet sich das 2/2-Wegeventil 67 in seiner Sperrstellung, während für hinreichenden Druck in der Zuführleitung 16 das 2/2-Wegeventil 67 umgeschaltet wird in seine Belüftungsstellung. In der Belüftungsstellung kann dann der Steuerdruck für das Kreisschutzventil 11 bzw. Überströmventil 30 gesteuert werden durch elektrische Ansteuerung des Magnetventils 52 durch die Steuereinheit 60. Weiterhin ist für die Ausführungsform gemäß Fig. 3 das Druckbegrenzungsventil 31 stromaufwärts des Kreisschutzventils 11 angeordnet. Weiterhin ist in Fig. 3 als eine Option die Zuführleitung 17 für die Nebenverbraucher nicht unmittelbar von der Zentralleitung 8 abgezweigt, sondern vielmehr stromabwärts des Druckbegrenzungsventils 31, so dass dieses sowohl für die Zuführleitung 16 als auch die Zuführleitung 17 mit den zugeordneten Verbraucherkreisen zuständig ist.

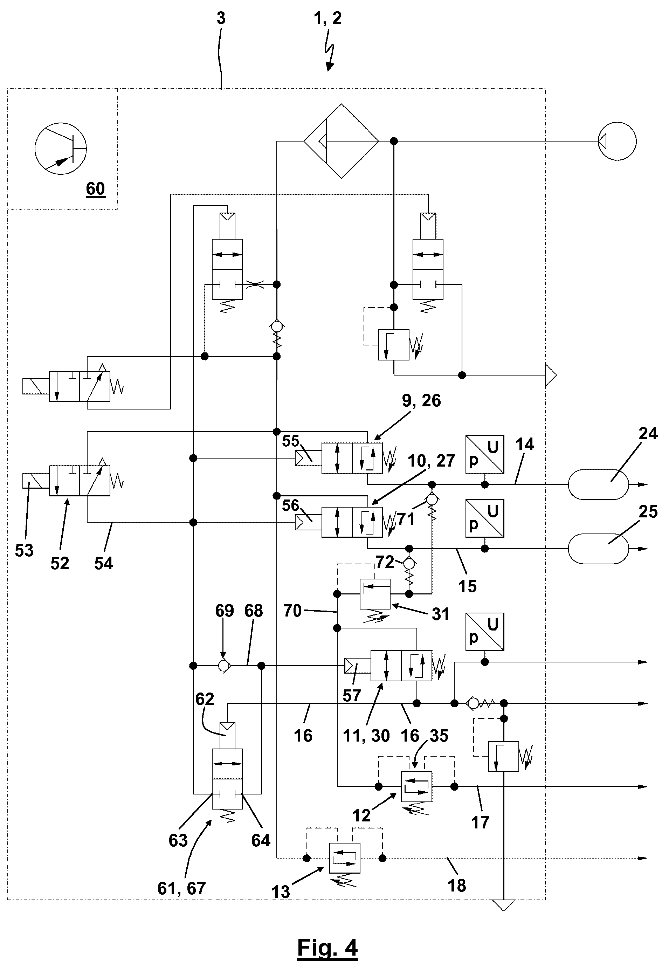

Für das in **Fig. 4** abgewandelte Ausführungsbeispiel ist das 2/2-Wegeventil 67 über eine Überbrückungsleitung 68 überbrückt, in welcher ein Rückschlagventil 69 angeordnet ist, welches eine Entlüftung des Steueranschlusses 57 auch bei gesperrten 2/2-Wegenventil 67 über das Magnetventil 52 in seiner elektrisch nicht angesteuerten Entlüftungsstellung ermöglicht. Hierdurch kann vermieden werden, dass für unzureichenden Druck in der Zuführleitung 16 mit dem 2/2-Wegeventil 67 in seiner Sperrstellung, beispielsweise für einen Befüllungsvorgang, Druckluft zwischen dem Anschluss 64 und dem Steueranschluss 57 eingesperrt ist, die auf unerwünschte Weise das Kreisschutzventil 11 bzw. Überströmventil 30 in seiner Stellung mit reduziertem Öffnungsdruck oder Überbrückung hält, womit die vorrangige Befüllung der Betriebsbremskreise I, II nicht möglich wäre.

Fig. 4 zeigt eine weitere Zusatzoption, gemäß welcher die Druckluft für den Verbraucherkreis III (Feststellbremse Zugfahrzeug und Anhängerbremse) nicht von der Zentralleitung 8 dem Kreisschutzventil 11 zugeführt wird, sondern vielmehr die Druckluft für das Kreisschutzventil 11 über eine Querleitung 70 von den Zuführleitungen 14, 15 entnommen wird. Hierbei sind zwischen die Querleitung 70 und die Zuführleitungen 14, 15 Rückschlagventile 71, 72 zwischengeschaltet, die eine Strömung von den Zuführleitungen 14, 15 zu der Querleitung 70 ermöglichen, aber eine umgekehrte Strömung sperren. In der Querleitung 70 ist darüber hinaus ein Druckbegrenzungsventil 31 angeordnet. Alternativ oder zusätzlich ist es möglich, dass über die Querleitung 70 die Zuführleitung 17 mit dem in dieser angeordneten Überströmventil 35 gespeist wird. Ziel dieser Ausführungsvariante ist es, eine Speisung der Verbraucherkreise III, IV über die Vorratsbehälter 24, 25 der Betriebsbremskreise I, II zu ermöglichen.

Gemeinsam ist den Ausführungsformen gemäß Fig. 2 bis 4, dass dem pneumatischen Schaltventil 61 als Steuerdruck der Druck in der Zuführleitung 16 zugeführt wird, nach dessen Maßgabe dann eine Umschaltung des pneumatischen Schaltventils 61 erfolgen kann. Mit erfolgter Umschaltung des pneumatischen Schaltventils 61 kann dann dem Steueranschluss 57 des Kreisschutzventils 11 ein Druck zugeführt werden, der über das Magnetventil 52 gesteuert werden kann.

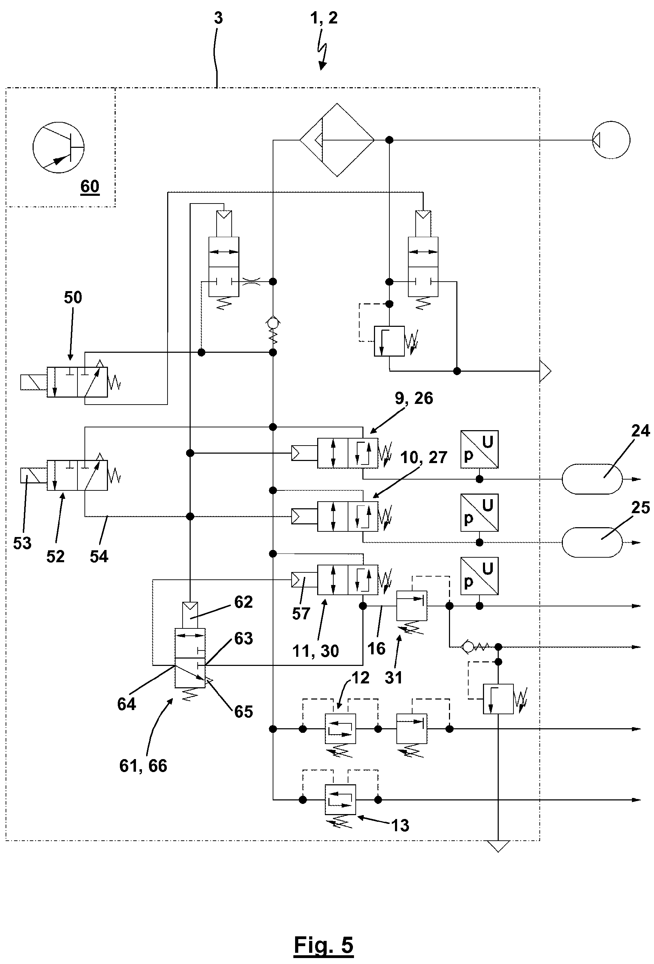

Diesbezüglich wählt die Ausführungsform gemäß Fig. 5 einen abweichenden Ansatz, der aber durch die vorliegende Erfindung umfasst sein soll:
Hier findet als pneumatisches Schaltventil 61 ebenfalls ein 3/2-Wegeventil 66 Einsatz. Allerdings ist für diese Ausführungsform der Anschluss 63 nicht gemäß Fig. 2 mit der zentralen Steuerleitung 54 verbunden, sondern vielmehr mit der Zuführleitung 16. Entsprechend ist für diese Ausführungsform der Steueranschluss 62 nicht mit der Zuführleitung 16 verbunden, sondern stattdessen mit der zentralen Steuerleitung 54. Für diese Ausführungsform kann durch Überführen des Magnetventils 52 in seine Be- oder Entlüftungsstellung der Steueranschluss 62 be- oder entlüftet werden, so dass eine Umschaltung des 3/2-Wegeventils 66 durch geeignete elektrische Ansteuerung des Magnetventils 52 möglich ist. Während in der in Fig. 5 wirksamen Entlüftungsstellung des 3/2-Wegeventils 66 mit nicht bestromtem Magnetventil 52 über das 3/2-Wegeventil 66 der Steueranschluss 57 entlüftet ist, so dass sich das Überströmventil 30 in seiner in Fig. 5 wirksamen ersten Betriebsstellung befindet, kann durch Bestromung des Magnetventils 52 das 3/2-Wegeventil 66 in seine Belüftungsstellung umgeschaltet werden. In dieser Belüftungsstellung liegt am Steueranschluss 57 der Druck der Zuführleitung 16 an. Ist in einer Erstbefüllungsphase kein Druck in der Zuführleitung 16 vorhanden, verbleibt zunächst das Überströmventil 30 in der in Fig. 5 wirksamen Schaltstellung. Ist hingegen nach einer ersten Befüllung auch die Zuführleitung 16 hinreichend druckbeaufschlagt und befindet sich das 3/2-Wegeventil 66 in seiner Durchlassstellung, liegt der Druck der Zuführleitung an dem Steueranschluss 57 an. Für ausreichenden Druck oberhalb des Umschaltdrucks kann dann das Überströmventil 30 mit einem verringerten Öffnungsdruck geöffnet werden oder das Überströmventil ist in seiner überbrückten Stellung.

Für die Ausführungsformen Fig. 2 bis Fig. 4 steuert das "multifunktionale" Magnetventil 52 unmittelbar die Druckbeaufschlagung des Steueranschlusses 57 in Betriebsituationen, in welchen sich das pneumatische Schaltventil 61 in seiner Durchlassstellung befindet, womit dann von dem Magnetventil 52 vorgegeben werden kann, ob der Steueranschluss 57 entlüftet wird oder an dem Steueranschluss 57 der Druck aus der Zentralleitung 8 anliegt. Darüber hinaus beeinflusst wird der Druck an dem Steueranschluss 57 von der Schaltstellung des Schaltventils 61, die wiederum gesteuert wird durch den Druck in der Zuführleitung 16 bzw. dem zugeordneten weiteren Verbraucherkreis. Damit ist letztendlich der Steuerdruck an dem Steueranschluss 57 sowohl von dem Druck in dem Verbraucherkreis III als auch von der elektrisch veränderbaren Stellung des Magnetventils 52 abhängig.

Für die in Fig. 5 dargestellte Ausführungsform steuert das Magnetventil 52 lediglich mittelbar den Druck an dem Steueranschluss 57, indem je nach Schaltstellung des Magnetventils 52 der Druck an dem Steueranschluss 62 des Schaltventils 61 derart verändert wird, dass eine Umschaltung des Schaltventils 61 erfolgt. Ist auf diese Weise aber das Schaltventil 61 in seine Durchlassstellung geschaltet, entspricht der Druck an dem Steueranschluss 57 dem Druck in der Zuführleitung 16 bzw. dem Druck in dem weiteren Verbraucherkreis III. Auch hier hängt somit der Druck an dem Steueranschluss 57 sowohl von der Schaltstellung des Magnetventils 52 (mittelbar) als auch (in einer Schaltstellung des Schaltventils 61) unmittelbar von dem Druck in der Zuführleitung 16 bzw. dem Verbraucherkreis III ab.

Die hier dargestellten Kreisschutzventile sind lediglich beispielhaft gewählt. Es wurde bereits darauf hingewiesen, dass abweichend zu den dargestellten Schaltsymbolen auch ansteuerbare Überströmventile gemäß DE 102 20 790 C1 eingesetzt werden können. Grundsätzlich sind im Rahmen der vorliegenden Erfindung beliebige Kreisschutzventile mit einzelnen Ventilen oder Ventilbaugruppen mit beliebiger Ansteuerung einsetzbar, die mindestens eine der folgenden Funktionen erfüllen:
- Steuerung der Befüllungsreihenfolge der Verbraucherkreise;
- Drucksicherung des Drucks in dem zugeordneten Verbraucherkreis;
- Ermöglichung einer Rückströmung für einen Druckluftaustausch von einem Verbraucherkreis mit einem anderen Verbraucherkreis;
- Absperrung einer der Verbrauchkreise im Fall einer Leckage.

Erfindungsgemäß ist somit das Magnetventil 52 multifunktional ausgebildet. Dies dient in einer ersten Funktion der Steuerung der Regeneration, indem die zentrale Steuerleitung 54 mit dem Steueranschluss 44 des Sperrventils 42 verbunden ist. In einer zweiten Funktion dient das Magnetventil 52 der Ansteuerung mindestens eines Kreisschutzventils 9, 10, indem mindestens ein Steueranschluss 55, 56 mit der zentralen Steuerleitung 54 verbunden ist. Für die in den Figuren dargestellten Ausführungsformen steuert das Magnetventil 52 die beiden Kreisschutzventile 9, 10, die für die Betriebsbremskreise I, II zuständig sind, an. In der dritten, erfindungsgemäßen Funktion erfolgt über das Magnetventil 52 mittelbar oder unmittelbar eine Beeinflussung der Druckverhältnisse an dem Steueranschluss 57 des Kreisschutzventils 11, welches dem Verbraucherkreis III zugeordnet ist. Entsprechend kann auch alternativ oder zusätzlich eine Wechselwirkung des Magnetventils 52 zur Ansteuerung der Kreisschutzventile weiterer Verbraucherkreise erfolgen.

**BEZUGSZEICHENLISTE**

| | | | |
|---|---|---|---|
| 1 | Druckluftanlage | 32 | Rückschlagventil |
| 2 | Baueinheit | 33 | Sicherheitsventil |
| 3 | Gehäuse | 34 | Entlüftung |
| 4 | Anschluss | 35 | Überströmventil |
| 5 | Kompressor | 36 | Druckbegrenzungsventil |
| 6 | Lufttrockner | 37 | Überströmventil |
| 7 | Rückschlagventil | 38 | |
| 8 | Zentralleitung | 39 | |
| 9 | Kreisschutzventil | 40 | |
| 10 | Kreisschutzventil | 41 | Bypassleitung |
| 11 | Kreisschutzventil | 42 | Sperrventil |
| 12 | Kreisschutzventil | 43 | Drossel |
| 13 | Kreisschutzventil | 44 | Steueranschluss |
| 14 | Zuführleitung | 45 | Entlüftung |
| 15 | Zuführleitung | 46 | Druckregler |
| 16 | Zuführleitung | 47 | Sperrventil |
| 17 | Zuführleitung | 48 | Eingangsleitung |
| 18 | Zuführleitung | 49 | Steueranschluss |
| 19 | Anschluss | 50 | Magnetventil |
| 20 | Anschluss | 51 | Steueranschluss |
| 21 | Anschluss | 52 | Magnetventil |
| 22 | Anschluss | 53 | Steueranschluss |
| 23 | Anschluss | 54 | zentrale Steuerleitung |
| 24 | Vorratsbehälter | 55 | Steueranschluss |
| 25 | Vorratsbehälter | 56 | Steueranschluss |
| 26 | Überströmventil | 57 | Steueranschluss |
| 27 | Überströmventil | 58 | Magnetventil |
| 28 | Drucksensor | 59 | Steueranschluss |
| 29 | Drucksensor | 60 | Steuereinheit |
| 30 | Überströmventil | 61 | pneumatisches Schaltventil |
| 31 | Druckbegrenzungsventil | 62 | pneumatischer Steueranschluss |
| 63 | Anschluss | | |
| 64 | Anschluss | | |
| 65 | Entlüftungsanschluss | | |
| 66 | 3/2-Wegeventil | | |
| 67 | 2/2-Wegeventil | | |
| 68 | Überbrückungsleitung | | |
| 69 | Rückschlagventil | | |
| 70 | Querleitung | | |
| 71 | Rückschlagventil | | |
| 72 | Rückschlagventil | | |
| 73 | Sicherheitsventil | | |

## Patentansprüche

1. Druckluftanlage (1) für ein Kraft- oder Nutzfahrzeug mit
a) einer Zentralleitung (8), die jeweils über Kreisschutzventile (9-13) mit Verbraucherkreisen (I, II, III) verbindbar ist, und
b) einem Magnetventil (52), welches
ba) sowohl für die Steuerung der Regeneration zuständig ist
bb) als auch mit Steueranschlüssen (55; 56) von Kreisschutzventilen (9, 10), welche in Zuführleitungen (14, 15) zu Betriebsbremsen zugeordneten Verbraucherkreisen (I, II) angeordnet sind, verbunden ist, wobei
c) das Magnetventil (52), welches sowohl für die Steuerung der Regeneration zuständig ist als auch mit Steueranschlüssen (55, 56) von Kreisschutzventilen (9, 10), welche in Zuführleitungen (14, 15) zu Betriebsbremsen zugeordneten Verbraucherkreisen (I, II) angeordnet sind, verbunden ist, auch die Druckbeaufschlagung eines Steueranschlusses (57) eines Kreisschutzventils (11), welches in einer Zuführleitung (16) zu einem weiteren Verbraucherkreis (III) angeordnet ist, steuert,
**dadurch gekennzeichnet, dass**
d) der an dem Steueranschluss (57) des Kreisschutzventils (11) in dem weiteren Verbraucherkreis (III) anliegende Steuerdruck sowohl von der Stellung des Magnetventils (52) als auch von dem Druck in dem weiteren Verbraucherkreis (III) oder einer Zuführleitung (16) zu dem weiteren Verbraucherkreis (III) abhängig ist.

2. Druckluftanlage (1) nach Anspruch 1,
**dadurch gekennzeichnet, dass**
ein pneumatisches Schaltventil (61) vorgesehen ist,
a) welches den Druck an dem Steueranschluss (57) des Kreisschutzventils (11), welches in der Zuführleitung (16) zu dem weiteren Verbraucherkreis (III) angeordnet ist, steuert und
b) welchem
- sowohl ein Druck des Magnetventils (52), welches sowohl für die Steuerung der Regeneration zuständig ist als auch mit Steueranschlüssen (55, 56) von Kreisschutzventilen (9, 10), welche in Zuführleitungen (14, 15) zu Betriebsbremsen zugeordneten Verbraucherkreisen (I, II) angeordnet sind, verbunden ist, als auch
- der Druck in dem weiteren Verbraucherkreis (III)
derart zugeführt wird, dass der an dem Steueranschluss (57) des Kreisschutzventils (11) in dem weiteren Verbraucherkreis (III) anliegende Steuerdruck sowohl von der Stellung des Magnetventils (52) als auch von dem Druck in dem weiteren Verbraucherkreis (III) abhängig ist.

3. Druckluftanlage (1) nach Anspruch 2,
**dadurch gekennzeichnet, dass**
a) das Magnetventil (52), welches sowohl für die Steuerung der Regeneration zuständig ist als auch mit Steueranschlüssen (55, 56) von Kreisschutzventilen (9, 10), welche in Zuführleitungen (14, 15) zu Betriebsbremsen zugeordneten Verbraucherkreisen (I, II) angeordnet sind, verbunden ist, über das pneumatische Schaltventil (61) mit dem Steueranschluss (57) des Kreisschutzventils (11) des weiteren Verbraucherkreises (III) verbunden ist und
b) ein Steueranschluss (62) des pneumatischen Schaltventils (61) mit dem weiteren Verbraucherkreis (III) verbunden ist.

4. Druckluftanlage (1) nach Anspruch 3, **dadurch gekennzeichnet, dass** das pneumatische Schaltventil (61) ein 3/2-Wegeventil (66) ist, welches
a) bei drucklosem Steueranschluss (62) des pneumatischem Schaltventils (61) eine Entlüftungsstellung einnimmt, so dass der Steueranschluss (57) des Kreisschutzventils (11) entlüftet ist, und
b) bei hinreichender Druckbeaufschlagung eine Belüftungsstellung einnimmt, in der ein Anschluss des Magnetventils (52) über das 3/2-Wegeventil (66) mit dem Steueranschluss (57) des Kreisschutzventils (11) verbunden ist.

5. Druckluftanlage (1) nach Anspruch 3, **dadurch gekennzeichnet, dass** das pneumatische Schaltventil (61) ein 2/2-Wegeventil (67) ist, welches
a) bei drucklosem Steueranschluss (62) eine Sperrstellung einnimmt und
b) bei hinreichender Druckbeaufschlagung eine Belüftungsstellung einnimmt, in der ein Anschluss des Magnetventils (52) über das 2/2-Wegeventil (67) mit dem Steueranschluss (57) des Kreisschutzventils verbunden ist.

6. Druckluftanlage (1) nach Anspruch 5, **dadurch gekennzeichnet, dass** parallel zu dem 2/2-Wegeventil (67) ein Rückschlagventil (69) angeordnet ist, welches eine Strömung von Druckluft von dem Steueranschluss (57) des Kreisschutzventils (11) zu dem Magnetventil (52) zulässt, aber eine Strömung von Druckluft von dem Magnetventil (52) zu dem Steueranschluss (57) des Kreisschutzventils (11) sperrt.

7. Druckluftanlage (1) nach Anspruch 2,
**dadurch gekennzeichnet, dass**
a) das Magnetventil (52), welches sowohl für die Steuerung der Regeneration zuständig ist als auch mit Steueranschlüssen (55, 56) von Kreisschutzventilen (9, 10), welche in Zuführleitungen (14, 15) zu Betriebsbremsen zugeordneten Verbraucherkreisen (I, II) angeordnet sind, verbunden ist, mit dem Steueranschluss (62) des pneumatischen Schaltventils (61; 66) verbunden ist und
b) ein Anschluss (63) des pneumatischen Schaltventils (61; 66) mit der Zuführleitung (16) des weiteren Verbraucherkreises verbunden ist und ein weiterer Anschluss (64) des pneumatischen Schaltventils (61; 66) mit dem Steueranschluss (57) des Kreisschutzventils (11) verbunden ist.

## Claims

1. Compressed air system (1) for a motor vehicle or a commercial vehicle with
a) a central line (8) which is connectable to consumer circuits (I, II, III) via respective circuit protection valves (9 - 13) and
b) a solenoid valve (52) which is both
ba) responsible for a control of a regeneration
bb) as well as connected to control ports (55; 56) of circuit protection valves (9, 10) which are arranged in supply lines (14, 15) for consumer circuits (I, II) related to service brakes,
c) the solenoid valve (52) which is both responsible for the control of the regeneration as well as connected to control ports (55, 56) of circuit protection valves (9, 10) which are arranged in supply lines (14, 15) to consumer circuits (I, II) related to service brakes also controls the pressurisation of a control port (57) of a circuit protection valve (11) which is arranged in a supply line (16) to further consumer circuit (III),
**characterised in that**
d) the control pressure biasing the control port (57) of the circuit protection valve (11) in the further consumer circuit (III) both depends on the position of the solenoid valve (52) as well as on the pressure in the further consumer circuit (III) or a supply line (16) to the further consumer circuit (III).

2. Compressed air system (1) of claim 1,
**characterised in that**
a pneumatical switching valve (61) is provided,
a) which controls the pressure at the control port (57) of the circuit protection valve (11) which is arranged in the supply line (16) to the further consumer circuit (III), and
b) to which
- a pressure of the solenoid valve (52) which is both responsible for the control of the regeneration and connected to control ports (55, 56) of circuit protection valves (9, 10) arranged in supply lines (14, 15) to consumer circuits (I, II) related to service brakes
- as well as the pressure in the further consumer circuit (III)
is supplied in such a way that the control pressure biasing the control port (57) of the circuit protection valve (11) in the further consumer circuit (III) depends both on the position of the solenoid valve (52) as well as on the pressure in the further consumer circuit (III).

3. Compressed air system (1) of claim 2,
**characterised in that**
a) the solenoid valve (52) which is both responsible for the control of the regeneration as well as connected to control ports (55, 56) of circuit protection valves (9, 10) which are arranged in supply lines (14, 15) to consumer circuits (I, II) related to service brakes is connected via the pneumatical switching valve (61) to the control port (57) of the circuit protection valve (11) of the further consumer circuit (III) and
b) a control port (62) of the pneumatical switching valve (61) is connected to the further consumer circuit (III).

4. Compressed air system (1) of claim 3, **characterised in that** the pneumatical switching valve (61) is a 3/2-way-valve (66) which
a) takes a deaerating position for depressurised control port (62) of the pneumatical switching valve (61) so that the control port (57) of the circuit protection valve (11) is deaerated and
b) for sufficient pressurisation takes an aerating position in which a port of the solenoid valve (52) is connected via the 3/2-way-valve (66) to the control port (57) of the circuit protection valve (11).

5. Compressed air system (1) of claim 3, **characterised in that** the pneumatical switching valve (61) is a 2/2-way-valve (67) which
a) takes a blocking position for depressurised control port (62) and
b) for sufficient pressurisation takes an aerating position in which a port of the solenoid valve (52) is connected via the 2/2-way-valve (67) to the control port (57) of the circuit protection valve.

6. Compressed air system (1) of claim 5, **characterised in that** parallel to the 2/2-way-valve (67) a check valve (69) is arranged which permits a stream of pressurised air from the control port (57) of the circuit protection valve (11) to the solenoid valve (52) but blocks a stream of pressurised air from the solenoid valve (52) to the control port (57) of the circuit protection valve (11).

7. Compressed air system (1) of claim 2,
**characterised in that**
a) the solenoid valve (52) which is both responsible for the control of the regeneration as well as connected to control ports (55, 56) of circuit protection valves (9, 10) which are arranged in supply lines (14, 15) for consumer circuits (I, II) related to service brakes is connected to the control port (62) of the pneumatical switching valve (61; 66) and
b) a port (63) of the pneumatical switching valve (61; 66) is connected to the supply line (16) of the further consumer circuit and another port (64) of the pneumatical switching valve (61; 66) is connected to the control port (57) of the circuit protection valve (11).

## Revendications

1. Installation à air comprimé (1) pour véhicule automobile ou véhicule utilitaire, avec
a) une conduite centrale (8) qui peut être raccordée à des circuits consommateurs (I, II, III) respectivement par le biais de vannes de protection de circuit (9-13), et
b) une électrovanne (52), qui
ba) non seulement est conçue pour la commande de la régénération
bb) mais est aussi raccordée à des connexions de commande (55; 56) de vannes de protection de circuit (9, 10) qui sont disposées dans des conduites d'amenée (14, 15) conduisant à des circuits consommateurs (I, II) affectés à des freins de service, dans laquelle
c) l'électrovanne (52), qui non seulement est conçue pour la commande de la régénération mais est aussi raccordée à des connexions de commande (55, 56) de vannes de protection de circuit (9, 10) qui sont disposées dans des conduites d'amenée (14, 15) conduisant à des circuit consommateurs (I, II) affectés à des freins de service, commande également l'alimentation en pression d'une connexion de commande (57) d'une vanne de protection de circuit (11) qui est disposée dans une conduite d'amenée (16) conduisant à un autre circuit consommateur (III),
**caractérisée en ce que**
d) la pression de commande présente sur la connexion de commande (57) de la vanne de protection de circuit (11) dans l'autre circuit consommateur (III) est fonction non seulement de la position de l'électrovanne (52) mais aussi de la pression dans l'autre circuit consommateur (III) ou dans une autre conduite d'amenée (16) conduisant à l'autre circuit consommateur (III).

2. Installation à air comprimé (1) selon la revendication 1,
**caractérisée en ce**
**qu'**il est prévu une vanne de commande pneumatique (61)
a) qui commande la pression sur la connexion de commande (57) de la vanne de protection de circuit (11) qui est disposée dans la conduite d'amenée (16) conduisant à l'autre circuit consommateur (III), et
b) à laquelle
- non seulement est raccordée une pression de l'électrovanne (52) qui non seulement est conçue pour la commande de la régénération mais qui est aussi raccordée à des connexions de commande (55, 56) de vannes de protection de circuit (9, 10) qui sont disposées dans des conduites d'amenée (14, 15) conduisant aux circuits consommateur (I, II) affectés à des freins de service, mais aussi à laquelle
- la pression dans l'autre circuit consommateur (III)
est conduite de telle sorte que la pression de commande présente sur la connexion de commande (57) de la vanne de protection de circuit (11) dans l'autre circuit consommateur (III) est fonction non seulement de la position de l'électrovanne (52) mais aussi de la pression dans l'autre circuit consommateur (III).

3. Installation à air comprimé (1) selon la revendication 2,
**caractérisée en ce que**
a) l'électrovanne (52), qui non seulement est conçue pour la commande de la régénération mais aussi est raccordée à des connexions de commande (55, 56) de vannes de protection de circuit (9, 10) qui sont disposées dans des conduites d'amenée (14, 15) conduisant à des circuits consommateurs (I, II) affectés à des freins de service, est raccordée à la connexion de commande (57) de la vanne de protection de circuit (11) de l'autre circuit consommateur (III) par le biais de la vanne de commande pneumatique (61), et
b) une connexion de commande (62) de la vanne de commande pneumatique (61) est raccordée à l'autre circuit consommateur (III).

4. Installation à air comprimé (1) selon la revendication 3, **caractérisée en ce que** la vanne de commande pneumatique (61) est une vanne à 3/2 voies (66) qui,
a) en cas de connexion de commande (62) sans pression de la vanne de commande pneumatique (61), adopte une position de purge d'air de telle sorte que la connexion de commande (57) de la vanne de protection de circuit (11) est purgée en air, et
b) en cas d'alimentation en pression suffisante, adopte une position de ventilation dans laquelle une connexion de l'électrovanne (52) est raccordée, par le biais de la vanne à 3/2 voies (66), à la connexion de commande (57) de la vanne de protection de circuit (11).

5. Installation à air comprimé (1) selon la revendication 3, **caractérisée en ce que** la vanne de commande pneumatique (61) est une vanne à 2/2 voies (67) qui,
a) en cas de connexion de commande (62) sans pression, adopte une position de blocage et,
b) en cas d'alimentation en pression suffisante, adopte une position de ventilation dans laquelle une connexion de l'électrovanne (52) est raccordée à la connexion de commande (57) de vanne de protection de circuit par le biais de la vanne à 2/2 voies (67).

6. Installation à air comprimé (1) selon la revendication 5, **caractérisée en ce que,** parallèlement à la vanne à 2/2 voies (67), il est disposé un clapet antiretour (69) qui permet un écoulement d'air comprimé à partir de la connexion de commande (57) de la vanne de protection de circuit (11) vers l'électrovanne (52) mais qui bloque un écoulement d'air comprimé à partir de l'électrovanne (52) vers la connexion de commande (57) de la vanne de protection de circuit (11).

7. Installation à air comprimé (1) selon la revendication 2,
**caractérisée en ce que**
a) l'électrovanne (52), qui non seulement est conçue pour la commande de la régénération mais est aussi raccordée à des connexions de commande (55, 56) de vannes de protection de circuit (9, 10) qui sont disposées dans des conduites d'amenée (14, 15) conduisant à des circuits consommateurs (I, II) affectés à des freins de service, est raccordée à la connexion de commande (62) de la vanne de commande pneumatique (61; 66), et
b) une connexion (63) de la vanne de commande pneumatique (61; 66) est raccordée à la conduite d'amenée (16) de l'autre circuit consommateur, et une autre connexion (64) de la vanne de commande pneumatique (61; 66) est raccordée à la connexion de commande (57) de la vanne de protection de circuit (11).
